# EUROPÄISCHE PATENTSCHRIFT

(11) **EP 0 476 411 B1**
(45) Veröffentlichungstag und Bekanntmachung des Hinweises auf die Patenterteilung: **30.11.1994**
(21) Anmeldenummer: 91114767.6
(22) Anmeldetag: 02.09.1991
(51) Int. Cl.: H04B 3/23

(54) **Verfahren zum Erkennen von periodisch auftretenden Digitalsignalen im Empfangsweg eines digitalen Echokompensators**
Method for the detection of periodical digital signals at the input of a digital echocanceller
Procédé pour la détection de signaux numériques périodiques à l'entrée d'un annuleur d'écho numérique

(30) Priorität: 21.09.1990 DE 4029987
(43) Veröffentlichungstag der Anmeldung: 25.03.1992
(73) Patentinhaber: SIEMENS AKTIENGESELLSCHAFT, 80333 München (DE)
(72) Erfinder: Kuhn, Frank, W-8000 München 71 (DE); von Pfeil, Dirsko, W-8011 Hohenschäftlarn (DE); Waretzki, Erhard, W-8013 Haar (DE)

(56) Entgegenhaltungen:
- EP-A- 0 307 765
- DE-A- 3 812 640
- GB-A- 2 214 034
- GB-A- 2 232 563

## Beschreibung

### Verfahren zum Erkennen von periodisch auftretenden Digitalsignalen im Empfangsweg eines digitalen Echokompensators

Die Erfindung bezieht sich auf ein Verfahren gemäß dem Oberbegriff des Anspruchs 1 und auf eine Anordnung zur Durchführung dieses Verfahrens. Periodisch auftretende Digitalsignale können Meßtöne oder Modemsignale sein.

Ein derartiges Verfahren und eine derartige Anordnung ist aus der deutschen Offenlegungsschrift DE 36 05 325 A1 bekannt. Dort ist eine Periodizitäts-Erkennungsschaltung mit einem Zähler für Nulldurchgänge beschrieben, die bei Auftreten eines periodischen Signals Steuerschaltungen in den Koeffizientenschaltungen des Transversalfilters des Echokompensators derart beeinflußt, daß ein Überlauf des Akkumulators infolge der Periodizität vermieden wird. Dieses Verfahren reagiert jedoch nur bei Signalen, deren Nulldurchgänge etwa gleich weit entfernt sind, wie dies beispielsweise bei Sinussignalen, nicht aber bei Frequenzgemischen der Fall ist.

In der deutschen Offenlegungsschrift DE 38 12 640 A1 ist weiter ein Transversalfilter für Echokompensatoren beschrieben, das ein Bewertungselement mit zwei Schreib-Lese-Speichern für Koeffizienten, mit einem dritten Schreib-Lese-Speicher als Verzögerungselement und mit einem Akkumulator enthält. Alle Speicher werden adressengesteuert im Zeitmultiplex betrieben.

Aus der europäischen Patentanmeldung EP 0 307 765 A1 ist außerdem eine Anordnung zum Erkennen periodischer Signale für einen Sprach-Echokompensator bekannt. Diese enthält eine Erkennungsschaltung mit einem Hilfs-Echokompensator, dessen Ausgang mit dem Signal auf dem Empfangsweg und damit mit dem Eingangssignal der Erkennungsschaltung verglichen wird. Vor das adaptive Transversalfilter des Hilfs-Echokompensators ist ein Laufzeitglied geschaltet, wodurch das Filter nicht mehr in der Lage ist, nicht-periodische Signale zu kompensieren. Daraus folgt, daß nur periodische Signale zu einem geringen Amplitudenwert des Ausgangssignals des Hilfs-Echokompensators führen, und ein Komparator ein Blockiersignal abgeben kann.

In der deutschen Veröffentlichung DE 32 35 914 T1 ist schließlich ein adaptives Filter mit einem Energie-Diskriminator für vom fernen Leitungsende kommende Energie beschrieben. Dieser wird zusammen mit einem adaptiven Filter dazu verwendet, die Filter-Übertragungsfunktionskennlinie zu aktualisieren. Speziell wird der Energie-Diskriminator dazu verwendet, zu unterscheiden, ob irgendwelche signifikante, vom fernen Leitungsende empfangene Energie Gesamtband-Energie oder nur Teilband-Energie ist. Ist letzteres der Fall, wird das adaptive Filter daran gehindert, die Übertragungskennlinie während Intervallen zu aktuallisieren, in denen derartige Energie empfangen wird.

Echokompensatoren werden bei Gabeln an Fernleitungen in internationalen Kopfämtern eingesetzt. Sie werden auch bei Gabelschaltungen im Grenzbereich zwischen Mobilfunknetzen und Drahtnetzen eingesetzt.

Trennen die Gabeln den Hin- und Rückweg nicht vollständig, so entstehen, durch die Laufzeit des Signals bedingt, Echos. Von der Sendestelle gelangt ein Sprachsignal nach der Verzögerungszeit über den Hin- und Rückweg gedämpft zurück zum Sprecher. Auf einer Fernleitung kann die Laufzeit 300 ms, auf dem End-Echoweg 40 ms betragen. Je länger das Echo läuft, um so störender wirkt es.

Echokompensatoren enthalten zur Erzeugung eines künstlichen Echos ein adaptives Transversalfilter, dessen Koeffizienten sich durch Ähnlichkeiten zwischen den Signalen am Sendeweg und am Empfangsweg einstellen. Der so entstehende Koeffizientensatz entspricht in seiner Gewichtung der Impulsantwort. Soll sich der Koeffizientensatz nicht mit Hilfe von Sprache oder Rauschen, sondern mit Hilfe eines periodischen Signals in Form einer Sinusspannung ausbilden, so findet der Echokompensator an sehr vielen Stellen zwischen den Signalen auf dem Sende- und auf dem Empfangsweg Übereinstimmung. Entsprechend stellen sich auch sehr viele Koeffizienten gleichzeitig ein.

Sprach-Echokompensatoren können lang andauernde periodische Signale nicht kompensieren und werden bei deren Empfang nach einiger Zeit instabil. Dieser Effekt entsteht dadurch, daß Signale, deren Periode wesentlich kürzer als die nachbildbare Laufzeit des Echokompensators ist, mehrdeutig kompensiert werden können. Dadurch vergrößern sich im adaptiven Transversalfilter Koeffizienten, deren Wirkung sich wegen der Periodizität des Eingangssignals solange aufhebt, bis eine Begrenzung im Rechenwerk eintritt.

Vor einer Datenübertragung wird vom jeweiligen Modem ein 2100-Hz-Ton ausgesendet. Erkennt der Echokompensator diesen Ton auf dem Empfangs- oder Sendeweg, muß er sich solange unwirksam schalten, bis die Datenübertragung beendet ist, d.h. bis sowohl im Empfangs- als auch im Sendeweg der Signalpegel unter - 33 dBmO abgesunken ist.

Aufgabe der Erfindung ist es, ein Verfahren zum Erkennen von periodisch auftretenden Digitalsignalen im Empfangsweg eines digitalen Echokompensators anzugeben, bei dem auch aus Frequenzgemischen bestehende periodische Digitalsignale erkannt werden. Eine weitere Aufgabe besteht darin, eine Anordnung zur Durchführung dieses Verfahrens anzugeben.

Diese Aufgaben werden mit den Merkmalen der Ansprüche 1 und 3 gelöst. Unteransprüche beschreiben Ausgestaltungen der Erfindung.

Anhand eines Ausführungsbeispiels wird die Erfindung nachstehend näher erläutert.
- Fig. 1: zeigt eine Schaltungsanordnung mit einem bekannten Echokompensator und einer erfindungsgemäßen Erkennungseinrichtung und
- Fig. 2: zeigt ein Pulsdiagramm zur Erläuterung des erfindungsgemäßen Verfahrens.

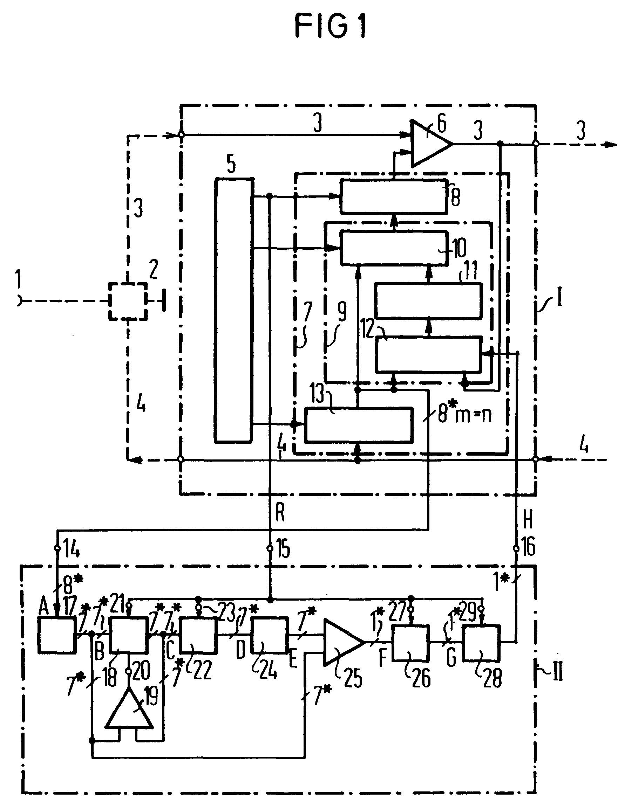

Figur 1 zeigt eine Schaltungsanordnung mit einer bekannten Gabel 2, einem bekannten Echokompensator I und einer erfindungsgemäßen Erkennungseinrichtung II.

Die Gabel 2 ist Teil eines Zweidraht/Vierdrahtübergangs mit einer Zweidrahtleitung 1 und einer Vierdrahtleitung mit einem Sendeweg 3 und einem Empfangsweg 4.

Der Echokompensator I enthält einen Subtrahierer 6 und ein adaptives Transversalfilter 7. Letzteres besteht wiederum aus einem Akkumulator 8, einer Koeffizienten-Regelung 9 und einem Laufzeitspeicher 13. Die Koeffizienten-Regelung 9 setzt sich aus einem Multiplizierer 10, einem Koeffizientenspeicher 11 und einem Korrelator 12 zusammen. Eine Taktversorgung 5 liefert die notwendigen Takte wie Rückstellimpulse R am Ausgang 15.

Die Koeffizienten-Regelung 9 und der Laufzeitspeicher 13 werden im Zeitmultiplex 512 mal in einer Bearbeitungsperiode von 125 µs bearbeitet. Damit ist der Echokompensator für eine Endlaufzeit von 64 ms bemessen.

Die Koeffizienten des Transversalfilters 7 stellen sich auf Ähnlichkeiten zwischen dem Signal auf dem Sendeweg 3 und dem Signal auf dem Empfangsweg 4 ein und erzeugen ein künstliches Echo, das im Subtrahierer 6 von dem Sendesignal mit Echo auf dem Sendeweg 3 abgezogen wird.

Die erfindungsgemäße Erkennungseinrichtung II enthält einen Betragsbildner 17, digitale Speicher 18, 22 und 28, Vergleicher 19 und 25, einen digitalen Amplitudenverkleinerer 24 und einen Zähler 26.

Es werden über eine 13-Segmentkennlinie gepreßte PCM-Signale auf dem Empfangsweg 4 verarbeitet. Die mit einem Stern versehenen Ziffern zeigen an, wieviele Leitungen dazu parallel verlaufen.

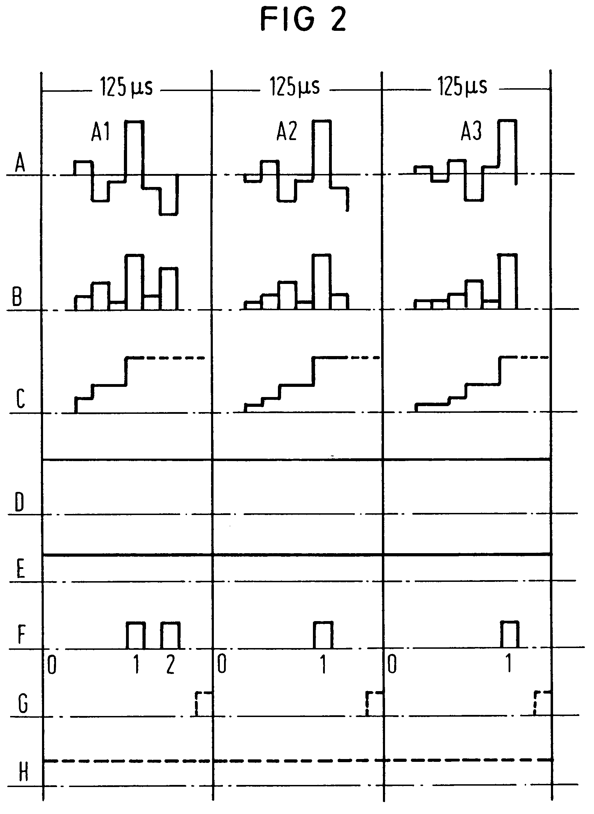

In der Figur 2 werden Analogsignale gezeigt, die in den Digitalsignalen codiert enthalten sind.

In den Eingang 14 des Betragsbildners 17 werden parallel 8-Bit-Codewörter aus dem Laufzeitspeicher 13 eingespeist. In Figur 2 sind oben drei Bearbeitungsperioden A mit zeitlich gleichen und gleich gedehnten Zeitabschnitten A1, A2 und A3 dargestellt. Diese enthalten je sechs analoge Amplitudenwerte. In jeder Bearbeitungsperiode erfolgt eine Verschiebung um die Zeitdauer eines Amplitudenwertes. Links rückt also stets ein neuer Amplitudenwert in den Zeitabschnitt ein, während ein anderer Amplitudenwert rechts den Zeitabschnitt verläßt. Der Betragsbildner 17 liefert ausgangsseitig die Beträge B, was einer Gleichrichtung entspricht. Das Vorzeichenbit des 8-Bit-Codewortes wird nicht weiter benötigt, weswegen er nur sieben Ausgänge aufweist.

Der Speicher 18 wird zu Beginn jeder Bearbeitungsperiode durch einen Rücksetzimpuls R am Rücksetzeingang 21 rückgesetzt. Der Speicher 18 übernimmt anschließend jeden Amplitudenwert B, der größer als ein von ihm gespeicherter Wert C ist (Fig. 2). Den Vergleich übernimmt der Vergleicher 19, an dessen Ausgang 20 ein Übernahmeauslösesignal auftritt, wenn B ≧ C ist. Ist der maximale Amplitudenwert erreicht, so bleibt dieser unverändert bis zum Ende der Bearbeitungsperiode erhalten.

Der Speicher 22 übernimmt zum Beginn jeder Bearbeitungsperiode infolge des an seinem Übernahmeauslöseeingang 23 anliegenden Rücksetzimpulses R den Inhalt des Speichers 18. Am Ausgang des Speichers 22 erscheint der Amplitudenmaximalwert D (Fig. 2).

Im Amplitudenverkleinerer 24 wird vom Digitalwert ein Wert 16 abgezogen, so daß sich der halbe analoge Amplitudenwert E ergibt (Fig. 2).

Der Vergleicher 25 vergleicht dieses Codewort mit dem Momentanwert am Ausgang des Betragsbildners 17. Ist der Momentanwert größer als der halbe Maximalwert, dann gibt der Vergleicher 25 einen Impuls F ab (Fig. 2).

Der zum Beginn der Bearbeitungsperiode über seinen Rücksetzeingang 27 rückgesetzte Zähler 26 zählt die Impulse F.

Übersteigt das Zählergebnis den Wert 307, dann erzeugt der Zähler 26 am Ende der Bearbeitungsperiode ein Überlaufsignal G (Fig. 2).

Entsteht ein Überlaufsignal, dann sind mehr als 60 % der Amplitudenwerte größer als der halbe Maximalwert. Dies bedeutet, daß das Signal auf dem Empfangsweg 4 mit hoher Wahrscheinlichkeit keine Sprache oder Rauschen ist. Ein Grenzwert der Erkennung ist etwas von der Signalform abhängig.

Der Speicher 28 wird ebenfalls zu Beginn jeder Bearbeitungsperiode über seinen Rücksetzeingang 29 zurückgesetzt. Am Ende jeder Bearbeitungsperiode wird das Überlaufsignal G von ihm übernommen, wenn es aufgetreten ist. In Figur 2 wird es deswegen gestrichelt dargestellt. Bei Empfang eines Überlaufsignals G - also bei Erkennung - gibt der Speicher 28 über seinen Ausgang 16 ein Schaltsignal H an den Korrelator 12 ab.

Dieser unterbricht die Koeffizientenregelung nach Unterschreiten eines vorgegebenen Echorestpegels von beispielsweise -40dBmO vollständig oder nur bei Vergrößerung der Koeffizienten.

Der Schwellenwert kann auch ein anderer Wert sein. Dann muß das Überlaufsignal G bei einem anderen empirisch zu ermittelnden Zählerstand ausgelöst werden.

Wären lineare PCM-Signale zu verarbeiten, dann wäre der Betragsbildner für 13-Bit-Codewörter und die Speicher 18 und 22 für 12-Bit-Codewörter auszulegen. Der Amplitudenverkleinerer 24 könnte die Amplitudenwerte beispielsweise durch zwei teilen.

Eine Erkennung ist auch noch möglich, wenn von den Codewörtern das niederwertigste Bit oder auch noch weitere niederwertige Bits nicht verarbeitet werden.

## Patentansprüche

1. Verfahren zum Erkennen von periodisch auftretenden Digitalsignalen im Empfangsweg (4) eines digitalen Echokompensators (I), bestehend aus einem adaptiven Transversalfilter (7) mit einem m parallele Wege aufweisenden, im Zeitmultiplex betriebenen Laufzeitspeicher (13) am Empfangsweg (4), mit einem im Zeitmultiplex betriebenen Bewertungselement (9) und mit einem Akkumulator (8), sowie aus einem Subtrahierer (6) und aus einer Taktversorgung (5) mit Rücksetzimpulsausgang (15), und ferner zur Abgabe eines Schaltsignals (H) für ein vollständiges oder nur bei Vergrößerung der Koeffizienten des Bewertungselements (9) erfolgendes Unterbrechen der Koeffizientenregelung bei einem Erkennen,
**dadurch gekennzeichnet**,
daß am Ausgang des Laufzeitspeichers (13) auftretende digitale Amplitudenwerte, die einen unter dem Maximalwert liegenden definierten Schwellenwert erreichen, innerhalb eines definierten Zeitraums gezählt werden und
daß bei einem definierten Zählerstand das Schaltsignal (H) abgegeben wird.

2. Verfahren nach Anspruch 1,
**dadurch gekennzeichnet**,
daß bei einem Schwellenwert von 50 % des Maximalwerts und bei einem Zählerstand von 60 % der Amplitudenwerte das Schaltsignal (H) ausgesendet wird.

3. Verfahren nach Anspruch 1,
**dadurch gekennzeichnet**,
daß von den digitalen Amplitudenwerten wenigstens die aus einer Folge von höherwertigen Bits einschließlich des höchstwertigsten Bits bestehenden gezählt werden.

4. Erkennungseinrichtung (II) zur Durchführung des Verfahrens nach Anspruch 1 oder 2,
**dadurch gekennzeichnet**,
daß ein digitaler Betragsbildner (17) vorgesehen ist, dessen n Eingänge mit den Ausgängen wenigstens für hochwertige Bits - n ≦ m - des Laufzeitspeichers (13) verbunden sind und der negative digitale Amplitudenwerte in positive umsetzt,
daß ein erster digitaler Speicher (18) vorgesehen ist, dessen n-1 Eingänge mit den n-1 Ausgängen des Betragsbildners (17) verbunden sind und der einen Übernahmeauslöseeingang (20) und einen Rücksetzimpulseingang (21) aufweist, der mit dem Rücksetzimpulsausgang (15) der Taktversorgung (5) verbunden ist,
daß ein erster digitaler Vergleicher (19) vorgesehen ist, dessen n-1 erste Eingänge mit den n-1 Eingängen des ersten digitalen Speichers (18) und dessen n-1 zweite Eingänge mit den n-1 Ausgängen des ersten Speichers (18) verbunden sind und dessen Ausgang mit dem Übernahmeauslöseeingang (20) des ersten digitalen Speichers (18) verbunden ist und der ein Auslösesignal abgibt, wenn der digitale Amplitudenwert an den ersten Eingängen größer als an den zweiten ist,
daß ein zweiter digitaler Speicher (22) vorgesehen ist, dessen n-1 Eingänge mit den n-1 Ausgängen des ersten digitalen Speichers (18) verbunden sind und der einen Übernahmeauslöseeingang (23) aufweist, der mit dem Rücksetzimpulsausgang (15) der Taktversorgung (5) verbunden ist,
daß ein digitaler Amplitudenverkleinerer (24) vorgesehen ist, dessen n-1 Eingänge mit den n-1 Ausgängen des zweiten digitalen Speichers (22) verbunden sind,
daß ein zweiter digitaler Vergleicher (25) vorgesehen ist, dessen n-2 erste Eingänge mit den n-2 Ausgängen des digitalen Amplitudenverkleinerers (24) und dessen n-2 zweite Eingänge mit den n-2 höchstwertigen Ausgängen des digitalen Betragsbildners (17) verbunden sind,
daß ein Zähler (26) vorgesehen ist, dessen Eingang mit dem Ausgang des zweiten digitalen Vergleichers (25) verbunden ist,
der dessen Ausgangsimpulse zählt, die entstehen, wenn der digitale Wert an seinen ersten Eingängen größer ist als an seinen zweiten Eingängen, und dessen Rücksetzimpulseingang (27) mit dem Rücksetzimpulsausgang (15) der Taktversorgung (5) verbunden ist, und
daß ein dritter digitaler Speicher (28) vorgesehen ist, dessen Eingang mit dem Ausgang des Zählers (26), dessen Ausgang mit einem Unterbrechereingang (16) des Bewertungselements (8) und dessen Rücksetzimpulseingang (29) mit dem Rücksetzimpulsausgang (15) der Taktversorgung (5) verbunden ist.

5. Erkennungseinrichtung (II) nach Anspruch 4 für einen Echokompensator für über eine 13-Segmentkennlinie gepreßte PCM-Signale mit n=8,
**dadurch gekennzeichnet**,
daß der digitale Amplitudenverkleinerer (24) von den Amplitudenwerten einen Quantisierungswert 16 oder 32 abzieht.

6. Erkennungseinrichtung (II) nach Anspruch 4 für einen Echokompensator (1) für lineare PCM-Signale mit n=13,
**dadurch gekennzeichnet**,
daß der digitale Amplitudenverkleinerer die Amplitudenwerte durch zwei oder vier teilt.

## Claims

1. Method for detecting periodically occurring digital signals in the reception path (4) of a digital echo canceller (I), comprising an adaptive transversal filter (7) with a delay line memory (13) on the reception path (4), which memory exhibits m parallel paths and is driven in time-division multiplex, having a weighting element (9) driven in time-division multiplex and having an accumulator (8), and further comprising a subtractor (6) and a clock source (5) having a reset pulse output (15), and further for emitting a switching signal (H) for an interruption, which is complete or which takes place only in the event of an increase in the coefficients of the weighting element (9), of the regulation of the coefficients upon a detection, characterized in that digital amplitude values which occur at the output of the delay line memory (13) and which reach a defined threshold value which is below the maximum value, are counted within a defined time interval, and in that the switching signal (H) is emitted at a defined counter status.

2. Method according to Claim 1, characterized in that the switching signal (H) is emitted at a threshold value of 50 % of the maximum value and at a counter status of 60 % of the amplitude values.

3. Method according to Claim 1, characterized in that of the digital amplitude values at least those which comprise a succession of more significant bits including the most significant bit are counted.

4. Detection device (II) for carrying out the method according to Claim 1 or 2, characterized in that a digital absolute-value generator (17) is provided, the n inputs of which are connected to the outputs at least for significant bits - n ≦ m - of the delay line memory (13) and which converts negative digital amplitude values into positive ones, in that a first digital memory (18) is provided, the n-1 inputs of which are connected to the n-1 outputs of the absolute-value generator (17) and which exhibits an acceptance release input (20) and a reset pulse input (21), which is connected to the reset pulse output (15) of the clock source (5), in that a first digital comparator (19) is provided, the n-1 first inputs of which are connected to the n-1 inputs of the first digital memory (18) and the n-1 second inputs of which are connected to the n-1 outputs of the first memory (18) and the output of which is connected to the acceptance release input (20) of the first digital memory (18) and which emits a release signal when the digital amplitude value at the first inputs is greater than at the second ones, in that a second digital memory (22) is provided, the n-1 inputs of which are connected to the n-1 outputs of the first digital memory (18) and which exhibits an acceptance release input (23), which is connected to the reset pulse output (15) of the clock source (5), in that a digital amplitude reducer (24) is provided, the n-1 inputs of which are connected to the n-1 outputs of the second digital memory (22), in that a second digital comparator (25) is provided, the n-2 first inputs of which are connected to the n-2 outputs of the digital amplitude reducer (24) and the n-2 second inputs of which are connected to the n-2 most significant outputs of the digital absolute-value generator (17), in that a counter (26) is provided, the input of which is connected to the output of the second digital comparator (25), which counts its output pulses which arise when the digital value at its first inputs is greater than at its second inputs, and the reset pulse input (27) of which is connected to the reset pulse output (15) of the clock source (5), and in that a third digital memory (28) is provided, the input of which is connected to the output of the counter (26), the output of which is connected to an interrupter input (16) of the weighting element (8) and the reset pulse input (29) of which is connected to the reset pulse output (15) of the clock source (5).

5. Detection device (II) according to Claim 4 for an echo canceller for PCM signals where n = 8 compressed with reference to a 13-segment characteristic, characterized in that the digital amplitude reducer (24) subtracts from the amplitude values a quantization value 16 or 32.

6. Detection device (II) according to Claim 4 for an echo canceller (I) for linear PCM signals where n=13, characterized in that the digital amplitude reducer divides the amplitude values by two or four.

## Revendications

1. Procédé pour identifier des signaux numériques apparaissant périodiquement dans la voie de réception (4) d'un suppresseur numérique d'échos (I), constitué par un filtre transversal adaptatif (7) possédant une mémoire à propagation (13) possédant m voies parallèles et fonctionnant en multiplexage temporel et située dans la voie de réception (4), un élément d'évaluation (9) fonctionnant en multiplexage temporel, et un accumulateur (8), ainsi que par un soustracteur (6) et par une unité d'alimentation de cadence (5) comportant une sortie (15) d'impulsions de remise à l'état initial, et, en outre, pour délivrer un signal de commutation (H) pour une interruption complète ou une interruption, intervenant uniquement dans le cas d'une augmentation des coefficients de l'élément d'évaluation (9), de la régulation des coefficients lors d'une identification,
caractérisé par le fait
que des valeurs numériques de l'amplitude, qui apparaissent à la sortie de la mémoire à propagation (13) et qui atteignent une valeur de seuil définie, inférieure à la valeur maximale, sont comptés à l'intérieur d'un intervalle de temps défini et,
que dans le cas d'un état de comptage défini, le signal de commutation (H) est délivré.

2. Procédé suivant la revendication 1, caractérisé par le fait que dans le cas d'une valeur de seuil égale à 50 % de la valeur maximale et dans le cas d'un état de comptage de 60 % des valeurs de l'amplitude, le signal de commutation (H) est émis.

3. Procédé suivant la revendication 1, caractérisé par le fait que parmi les valeurs numériques de l'amplitude, on décompte au moins les bits constitués par une suite de bits de poids supérieur, y compris le bit de poids maximum.

4. Dispositif d'identification (II) pour la mise en oeuvre du procédé suivant la revendication 1 ou 2,
caractérisé par le fait
qu'il est prévu un dispositif numérique (17) de formation de valeur absolue, dont n entrées sont reliées aux sorties au moins pour des bits de poids élevé - n ≦ m - de la mémoire à propagation (13) et qui convertit des valeurs numériques négatives de l'amplitude en des valeurs positives,
qu'il est prévu une première mémoire numérique (18), dont n-1 entrées sont reliées aux n-1 sorties du dispositif (17) de formation de la valeur absolue et qui possède une entrée de déclenchement de transfert (20) et une entrée d'impulsions de remise à l'état initial (21), qui est reliée à la sortie (15) des impulsions de remise à l'état initial de l'unité d'alimentation de cadence (5),
qu'il est prévu un premier comparateur numérique (19), dont les n-1 premières entrées sont reliées aux n-1 entrées de la première mémoire numérique (18) et dont les n-1 secondes entrées sont reliées aux n-1 sorties de la première mémoire (18) et dont la sortie est reliée à l'entrée de déclenchement de transfert (20) de la première mémoire numérique (18) et qui délivre un signal de déclenchement, lorsque la valeur d'amplitude numérique appliquée aux premières entrées est supérieure à celle appliquée aux secondes entrées,
qu'il est prévu une seconde mémoire numérique (22), dont les n-1 entrées sont reliées aux n-1 sorties de la seconde mémoire numérique (18) et qui possède une entrée de déclenchement de transfert (23), qui est reliée à la sortie (15) d'impulsions de remise à l'état initial de l'unité d'alimentation de cadence (5),
qu'il est prévu un réducteur numérique de l'amplitude (24), dont les n-1 entrées sont reliées aux n-1 sorties de la seconde mémoire numérique (22),
qu'il est prévu un second comparateur numérique (25), dont n-2 premières entrées sont reliées aux n-2 sorties du réducteur numérique d'amplitude (24) et dont les n-2 secondes entrées sont reliées aux n-2 sorties de poids maximum du second dispositif numérique (17) de formation de la valeur absolue,
qu'il est prévu un compteur (26), dont l'entrée est reliée à la sortie du second comparateur numérique (25) et qui compte les impulsions de sortie de ce compteur qui apparaissent lorsque la valeur numérique présent à ces premières entrées est supérieure à la valeur numérique présente à ces secondes entrées et dont l'entrée (27) d'impulsions de remise à l'état initial est reliée à la sortie (15) d'impulsions de remise à l'état initial de l'unité d'alimentation de cadence (5), et
qu'il est prévu une troisième mémoire numérique (28), dont l'entrée est reliée à la sortie du compteur (26), dont la sortie est reliée à une entrée d'interruption (16) de l'unité d'évaluation (8) et dont l'entrée de l'impulsion de remise à l'état initial (29) est reliée à la sortie de l'impulsion de remise à l'état initial (15) de l'unité d'alimentation en cadence (5).

5. Dispositif d'identification (II) suivant la revendication 4 pour un suppresseur d'échos pour des signaux MIC comprimés avec une courbe caractéristique à 13 segments, avec n=8, caractérisé par le fait que le réducteur numérique d'amplitude (24) déduit des valeurs d'amplitude une valeur de quantification (16 ou 32).

6. Dispositif d'identification (II) suivant la revendication 4, pour un compensateur d'écho (I) pour des signaux MIC linéaires avec n=13, caractérisé par le fait que le réducteur numérique d'amplitude divise les valeurs d'amplitude par deux ou quatre.
